# EUROPÄISCHE PATENTANMELDUNG

(11) **EP 3 203 609 A1**
(43) Veröffentlichungstag der Anmeldung: **09.08.2017**
(21) Anmeldenummer: 16154281.6
(22) Anmeldetag: 04.02.2016
(51) Int. Cl.: H02K 1/27

(54) **LÄUFER FÜR EINE PERMANENTMAGNETERREGTE SYNCHRONMASCHINE, POLLÜCKENSTAB FÜR EINEN SOLCHEN LÄUFER UND VERFAHREN ZUM HERSTELLEN EINES SOLCHEN LÄUFERS**

(71) Anmelder: Siemens Aktiengesellschaft, 80333 München (DE)
(72) Erfinder: Angler, Daniel, 97633 Großbardorf (DE); Bzdziuch, Michael, 97631 Bad Königshofen (DE); Eckert, Rainer, 97616 Bad Neustadt / Herschfeld (DE); Kraus, Andreas, 97647 Sondheim (DE); Seufert, Jürgen, 97616 Bad Neustadt (DE)

(57) **Zusammenfassung**

Die Erfindung betrifft einen Läufer (2) für eine permanentmagneterregte Synchronmaschine, umfassend ein auf einer sich in Axialrichtung (A) erstreckenden Welle (4) angeordnetes Blechpaket (6), um dessen Umfang mehrere Pole (14) angeordnet sind, wobei pro Pol mindestens ein Magnet (10) vorgesehen ist. Im Hinblick auf eine besonders gute Sicherung der Magnete gegen Verrutschen sind Pollückenstäbe (12) zwischen den Polen (14) derart positioniert sind, dass in Umfangsrichtung betrachtet jeder Magnet (10) mit einer ersten Seite (16a) und einer gegenüberliegenden zweiten Seite (16b) jeweils an einem Pollückenstab (12) anliegt.

## Beschreibung

Läufer für eine permanentmagneterregte Synchronmaschine, Pollückenstab für einen solchen Läufer und Verfahren zum Herstellen eines solchen Läufers

Die Erfindung betrifft einen Läufer für eine permanentmagneterregte Synchronmaschine, umfassend ein auf einer sich in Axialrichtung erstreckenden Welle angeordnetes Blechpaket, um dessen Umfang mehrere Pole angeordnet sind, wobei pro Pol mindestens ein Magnet vorgesehen ist. Die Erfindung betrifft weiterhin einen Pollückenstab für einen solchen Läufer sowie ein Verfahren zum Herstellen eines solchen Läufers.

Prinzipiell gibt es zwei Möglichkeiten Läufer für Synchronmaschinen mit permanenterregten Magneten zu bestücken: mit innenliegenden Magneten, bei denen die Magnete in Taschen der Läuferblechen geschoben werden, und mit außenliegenden Magneten, bei denen de Magnete um den Umfang des Läufers fixiert sind. Bei einem Läufer mit außenliegenden Magneten werden die Magnete in der Regel durch einen geeigneten Kleber und/oder durch eine Bandage mit entsprechender Vorspannung an ihrer Position festgehalten.

Im Betrieb der Synchronmaschine bei der Rotation des Läufers sind die Magnete starken Fliehkräften ausgesetzt. Zusätzlich zu den Fliehkräften wirken auf die Magnete Scherkräfte, die bei einer nicht-ausreichenden Fixierung der Magnete ihren Versatz verursachen können. Die Scherkräfte treten insbesondere bei Beschleunigungs- und Bremsvorgängen als auch bei Rüttel- und Schockbelastung aus. In solchen Fällen kann eine Bandage mit Vorspannung den Magnetverbund nur bedingt halten.

Die Magnete können u.a. als Schalenmagnete ausgebildet sein. Schalenmagnete mit zwei gekrümmten Oberflächen sind z.B. in der EP 2 073 352 A1 beschrieben.

Um den Scherkräften entgegenzuwirken, wird bei den Schalmagneten, die um den Umfang von Blechpaketen mit zylindrischen Läuferblechen angeordnet sind, ein geeigneter Kleber eingesetzt. Da die Magnete gegen Durchrutschen gesichert werden müssen, ist der Klebeprozess aufwendig. Alternativ weisen die Läuferbleche zwischen den Polen seitliche Anschlagnasen auf. Bei dieser Ausführung erweist sich jedoch eine Staffelung der Magnete als schwierig, da die Bandage sich in Spalte zwischen den Magneten hineinzieht und das Bandagieren somit beeinträchtigt wird.

Der Erfindung liegt die Aufgabe zugrunde, eine Anordnung der Magnete eines Läufers zu ermöglichen, bei der eine besonders gute Sicherung der Magnete gegen Verrutschen gewährleistet ist.

Die Aufgabe wird erfindungsgemäß gelöst durch einen Läufer für eine permanentmagneterregte Synchronmaschine, umfassend ein auf einer sich in Axialrichtung erstreckenden Welle angeordnetes Blechpaket, um dessen Umfang mehrere Pole angeordnet sind, wobei pro Pol mindestens ein Magnet vorgesehen ist und wobei Pollückenstäbe zwischen den Polen derart positioniert sind, dass in Umfangsrichtung betrachtet jeder Magnet mit einer ersten Seite und einer gegenüberliegenden zweiten Seite jeweils an einem Pollückenstab anliegt.

Die Erfindung basiert auf der Überlegung, dass eine zuverlässige Sicherung der Magnete gegen Scherung oder Verrutschen gewährleistet wird, indem zwischen den reihenförmigen Polen Pollückenstäbe vorgesehen sind, welche die Magnete seitlich stützen. Dabei steht jeder Magnet mit seiner ersten Seite und seiner zweiten Seite in Kontakt mit zwei Pollückenstäben. Jeder Pollückenstab wiederum stützt die Magnete insbesondere zweier Pole. Dass die Pollückenstäbe zwischen den Polen angeordnet sind und jeder Magnet beidseitig großflächig oder wenigstens punktuell an einem Pollückenstab anliegt, verhindern die Pollückenstäbe, dass die Magnete aufgrund der Scherkräfte sich entlang der Oberfläche des Blechpakets verschieben.

Die Pollückenstäbe sind von den Magneten und den Läuferblechen getrennte Bauelemente, die insbesondere aus einem anderen Material als die Magnete und die Läuferbleche ausgebildet sind. Die Pollückenstäbe sind dabei Distanzhalter, welche durch den Kontakt mit den Magneten die Magnete an ihrer jeweiligen Position festhalten. Die Form und die Größe der Pollückenstäbe sind dabei mit der Form, der Größe und der Anordnung der Magnete auf dem Blechpaket abgestimmt.

Die Pollückenstäbe können mehrteilig ausgestaltet sein, so dass zwischen zwei Polen in Axialrichtung insbesondere mehrere Pollückenstäbe hintereinander angeordnet sind. Im Hinblick auf eine Reduktion der Anzahl der Pollückenstäbe und des Aufwands zum Anbringen der Pollückenstäbe ist zwischen je zwei Polen lediglich ein Pollückenstab vorgesehen, der vorzugsweise mindestens so lang ist wie die Pole.

Damit die magentischen Eigenschaften des Rotors nicht beeinträchtigt werden, sind die Pollückenstäbe vorteilhafterweise aus einem magnetisch nicht leitenden Material ausgebildet, z.B. Kunststoff, Aluminium, etc.

Vorzugsweise sind die Pollückenstäbe am Blechpaket fixiert. Auf diese Weise wird gewährleitstet, dass die Pollückenstäbe nicht verrutschen und einen besonders sicheren Halt für die Magnete bieten. Zweckdienlicherweise ist hierzu eine formschlüssige Verbindung hergestellt, indem Zapfen an den Pollückenstäben vorgesehen sind, welche Zapfen im zusammengebauten Zustand des Rotors radial nach innen gerichtet sind und in Pollücken zwischen den Polen greifen. Im Falle, dass beim Zusammenbau des Rotors die Magnete zunächst mittels Klebeband an der Oberfläche fixiert werden, sind die Zapfen insbesondere an Stellen, an denen das Klebeband aufgebracht ist, unterbrochen, damit das Klebeband nicht beschädigt wird.

Dank der Pollückenstäbe ist zudem eine Staffelung der Magnete möglich. Für diesen Zweck weisen die Pollückenstäbe mindestens zwei, bevorzugt mehrere Abschnitte auf, die in Axialrichtung betrachtet zueinander versetzt sind. Der Staffelwinkel der Pole ist dabei insbesondere durch die Form der Pollückenstäbe vorgegeben.

Im Hinblick auf einen besonders sicheren Halt der Magnete stehen die Pollückenstäbe gemäß einer bevorzugten Ausführungsform vollflächig mit der ersten und der zweiten Seite der Magnete in Kontakt stehen.

Gemäß einer alternativen bevorzugten Ausgestaltung weisen die Pollückenstäbe mehrere quer zur Ausführungsform sich erstreckende Stege auf, über welche sie die Magnete kontaktieren. Die Pollückenstäbe stützen dabei die Seiten der Magnete punktuell oder über einen Teil der Seitenlänge an einer oder mehreren Stellen. Diese Ausführungsform ist besonders materialsparend.

Bevorzugt sind die Magnete als Schalenmagnete ausgebildet. Schalenmagnete werden in der Regel um zylindrische Blechpakete mit einem kreisrundem Querschnitt der einzelnen Bleche angeordnet, so dass ohne weitere Sicherungsmaßnahmen die Gefahr eines Verrutschens der Magnete groß ist, wodurch die Anforderungen an einen sicheren Halt solcher Schalmagnete besonders hoch sind.

Nach einer bevorzugten Ausgestaltung ist auf dem Blechpaket unterhalb der Magnete Klebeband aufgebracht. Dieses Klebeband wird vor den Pollückenstäben und den Magneten insbesondere in einzelnen Ringen um den Umfang des Blechpakets aufgebracht und dient lediglich zum Fixieren der Magnete bzw. Pollückenstäbe. In Bezug auf die Fliehkräfte und/oder die Scherkräfte hat das Klebeband insbesondere keine Wirkung.

Nach einer weiteren bevorzugten Ausgestaltung ist die Anordnung von Magneten und Pollückenstäben bandagiert. Hierdurch werden die Magnete und die Pollückenstäbe gegen die Fliehkräfte im Betrieb des Läufers gesichert. Zur Aufnahme von einem Bandageanfang und/oder einem Bandageende werden bei geblechten Läufern in der Regel Endscheiben eingesetzt. Die Pollückenstäbe können hierbei genutzt werden, um die Funktion der Endscheibe sicher zu stellen. Die Endscheibe kann somit entfallen.

Zweckdienlicherweise weisen die Pollückenstäbe mehrere radial nach außen offene Zwischenräume auf. Es wird somit eine profilierte Oberfläche geschaffen, die mit mehreren offenen Zwischenräumen versehen ist. Der Vorteil einer solchen Profilierung ist, dass die Pollückenstäbe zum Wuchten genutzt werden können, insbesondere als Befestigung für ein Wuchtkit.

Die Aufgabe wird weiterhin erfindungsgemäß gelöst durch einen Pollückenstab für einen Läufer nach einer der oben genannten Ausführungen.

Die Aufgabe wird schließlich erfindungsgemäß gelöst durch ein Verfahren zum Herstellen eines solchen Läufers für eine permanentmagneterregte Synchronmaschine, bei dem:
- das Blechpaket auf die Welle gefügt wird,
- Klebeband zum Vorfixieren der Magnete um den Umfang des Blechpakets angebracht wird,
- die Pollückenstäbe und die Magnete angeordnet werden, und
- der Läufer bandagiert wird.

Die in Bezug auf den Läufer bereits angeführten Vorteile und bevorzugten Ausgestaltungen lassen sich sinngemäß auf den Pollückenstab und das Herstellungsverfahren übertragen.

Bevorzugt werden zuerst die Pollückenstäbe auf dem Blechpacket fixiert, insbesondere formschlüssig. Anschließend werden die Magnete, magnetisiert oder unmagnetisiert, zwischen den Pollückenstäben axial verteilt. Denkbar sind jedoch auch andere Reihenfolgen bei der Verteilung der Pollückenstäbe und der Magnete auf dem Blechpaket. Bei unmagnetisierten Magneten werden diese nach dem Bandagieren schließlich magnetisiert.

Ein Ausführungsbeispiel der Erfindung wird anhand einer Zeichnung näher erläutert. Hierin zeigen:
- FIG 1: in einer perspektivischen Darstellung einen Läufer umfassend ein Blechpaket mit aufgebrachtem Klebeband,
- FIG 2: in einer perspektivischen Darstellung das Blechpaket gemäß FIG 1 mit fixierten Pollückenstäben und Magneten,
- FIG 3: in einer perspektivischen Darstellung eine erste Ausführungsvariante eines Pollückenstabs,
- FIG 4: eine Seitenansicht auf einen Pollückenstab gemäß FIG 3,
- FIG 5: in einer perspektivischen Darstellung einen zweiten Läufer mit einer zweiten Ausführungsvariante eines Pollückenstabs,
- FIG 6: in einer perspektivischen Darstellung ein Pollückenstab gemäß FIG 5, und
- FIG 7: eine Draufsicht auf einen Pollückenstab gemäß FIG 5 und FIG 6.

Gleiche Bezugszeichen haben in den verschiedenen Figuren die gleiche Bedeutung.

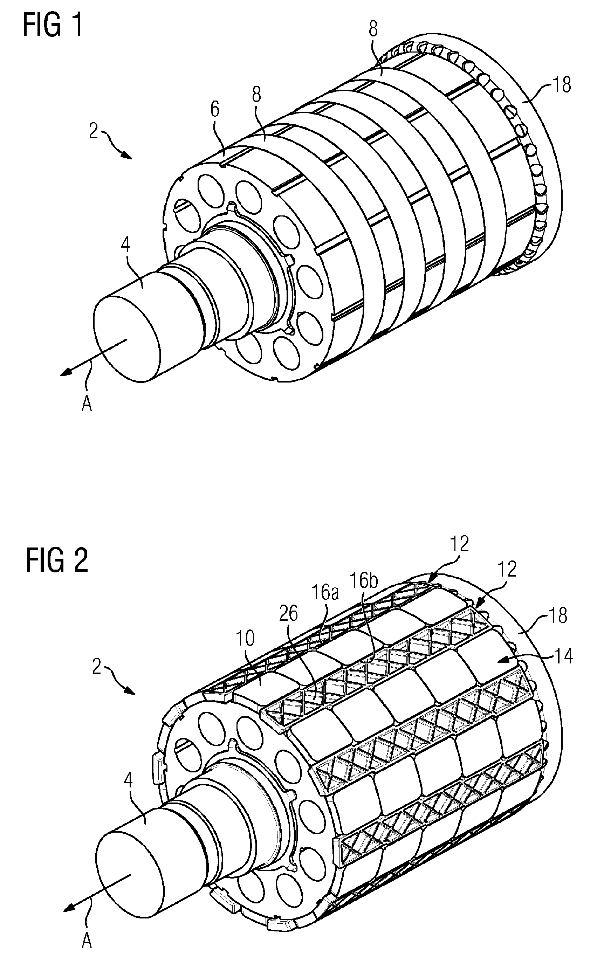

In den FIG 1 und FIG 2 ist der schrittweise Aufbau eines erfindungsgemäßen Läufers 2 für den Einsatz in einer hier nicht näher gezeigten permanentmagneterregten Synchronmaschine dargestellt, insbesondere in einem Servomotor. Der Läufer 2 umfasst eine sich in einer Axialrichtung A erstreckende Welle 4 und ein Blechpaket 6.

In einem ersten Herstellungsschritt wird das Blechpaket 6 auf die Welle 4 aufgebacht. Im nächsten Schritt wird um den Umfang des Blechpakets 6 Klebeband 8 in mehreren ringförmigen Streifen angebracht. Das Klebeband 8 dient lediglich zum Fixieren von permanenterregen Magneten 10 und ggf. von Pollückenstäben 12, die in einem dritten Schritt auf den Umfang des Blechpakets 6 verteilt werden. Die Magnete 10 sind in diesem Ausführungsbeispiel als Schalenmagnete ausgestaltet und bilden in Axialrichtung mehrere reihenförmige Pole 14.

Zwischen den Polen 14 sind die Pollückenstäbe 12 angeordnet, welche ein Verrutschen der Magnete 10 verhindern. Die Pollückenstäbe 12 sind hierbei alle gleich breit und gleich lang und sind aus einem magnetisch nicht leitenden Material, z.B. Aluminium oder Kunststoff ausgebildet. Jeder Magnet 10 weist eine erste, sich in Axialrichtung A ersteckende Seite 16a und eine gegenüberliege zweite, sich in Axialrichtung A erstreckende Seite 16b auf. Die Pollückenstäbe 12 sind dabei so positioniert, dass jeder Magnet 10 mit seiner ersten Seite 16a an einem Pollückenstab 12 anliegt und mit seiner zweiten Seite 16b an einem weiteren Pollückenstab 12 anliegt. Im Ausführungsbeispiel gemäß FIG 1 und FIG 2 liegen die Magnete 12 vollflächig mit ihrer ersten Seite 16a und zweiten Seite 16b an, d.h. es erfolgt ein Kontakt zwischen dem Magneten 10 und dem anliegenden Pollückenstab 12 insbesondere über die gesamte Länge der Seiten 16a, 16b.

In einem letzten Herstellungsschritt wird der Läufer 2 mittels einer hier nicht näher gezeigten Bandage bandagiert. Zur Aufnahme des Bandageanfangs bzw. Bandageendes ist eine Endscheibe 18 vorgesehen. Ihre Funktion kann jedoch von den Pollückenstäben 12 übernommen werden.

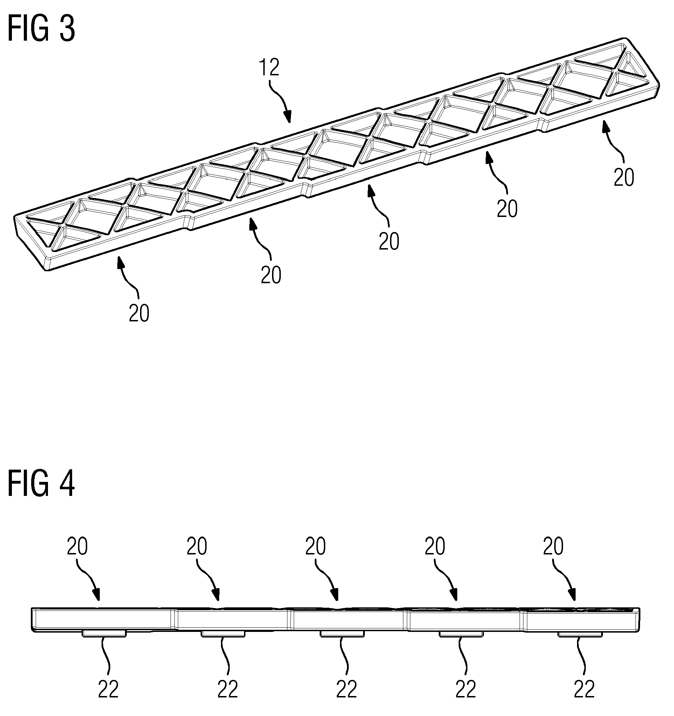

In den FIG 3 und FIG 4 ist eine erste Ausführungsvariante der Pollückenstäbe 12 gezeigt. Die Pollückenstäbe 12 weisen mehrere Abschnitte 20 auf, die in Axialrichtung A betrachtet zueinander versetzt sind. Darüber hinaus weisen die Pollückenstäbe 12 Zapfen 22 auf, welche radial nach innen gerichtet sind und die Pollückenstäbe 12 über eine formschlüssige Verbindung am Blechpaket 6 fixieren. An ihrer äußeren Seite weisen die Pollückenstäbe 12 eine gitterförmige Profilierung auf.

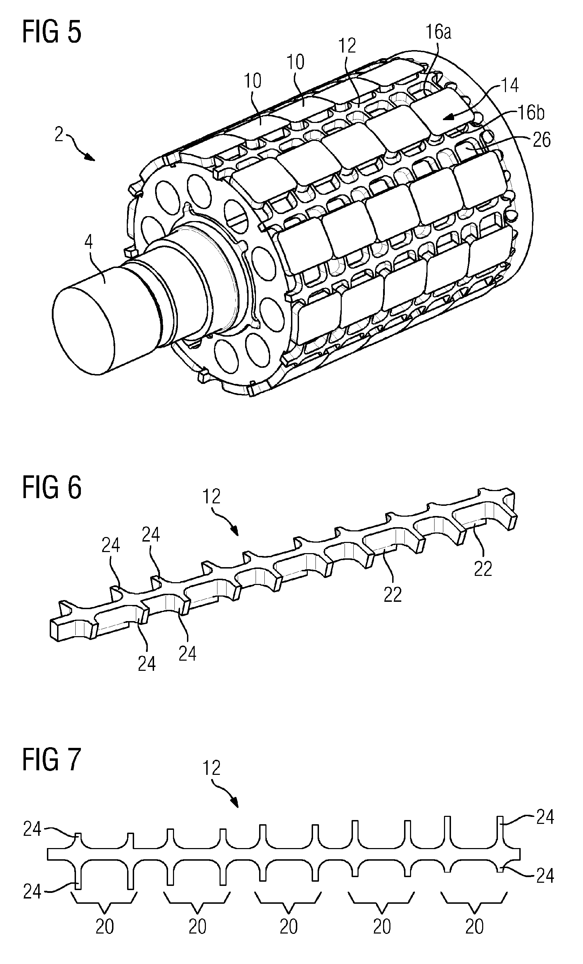

Eine zweite Ausführungsvariante der Pollückenstäbe 12 ist aus FIG 5 bis FIG 7 ersichtlich. Die Pollückenstäbe 12 weisen hierbei mehrere quer zur Axialrichtung A verlaufende Stege 24 auf, über welche sie die Seiten 16a, 16b der Magnete 10 punktuell kontaktieren. Die Pollückenstäbe 12 weisen somit im weiteren Sinne eine Fischgrätenform auf. Im gezeigten Ausführungsbeispiel wird dabei jede Seite 16a, 16b eines Magnets 10 von zwei Stegen 24 gestützt. Wie insbesondere aus FIG 7 ersichtlich ist, weisen die Pollückenstäbe 12 der zweiten Ausführungsvariante ebenfalls mehrere Abschnitte 20 auf, wobei die Länge der Stege 24 zwischen den unterschiedlichen Abschnitten 20 variiert wird, damit eine Staffelung der Magnete 10 in Axialrichtung 10 ermöglicht wird.

Die Pollückenstäbe 12 beider Ausführungsvarianten weisen zudem aufgrund ihrer profilierten Oberfläche im zusammengebauten Zustand des Läufers 2 mehrere Zwischenräume 26 auf, die zumindest radial nach außen offen sind (siehe FIG 2 und FIG 5). Diese hohlen Zwischenräume können insbesondere zum Wuchten des Läufers 2 genutzt werden.

## Patentansprüche

1. Läufer (2) für eine permanentmagneterregte Synchronmaschine, umfassend ein auf einer sich in Axialrichtung (A) erstreckenden Welle (4) angeordnetes Blechpaket (6), um dessen Umfang mehrere Pole (14) angeordnet sind, wobei pro Pol mindestens ein Magnet (10) vorgesehen ist,
**dadurch gekennzeichnet, dass** Pollückenstäbe (12) zwischen den Polen (14) derart positioniert sind, dass in Umfangsrichtung betrachtet jeder Magnet (10) mit einer ersten Seite (16a) und einer gegenüberliegenden zweiten Seite (16b) jeweils an einem Pollückenstab (12) anliegt.

2. Läufer (2) nach Anspruch 1,
**dadurch gekennzeichnet, dass** die Pollückenstäbe (12) mindestens so lang sind wie die Pole (14).

3. Läufer (2) nach Anspruch 1 oder 2,
**dadurch gekennzeichnet, dass** die Pollückenstäbe (12) aus einem magnetisch nicht leitenden Material ausgebildet sind.

4. Läufer (2) nach einem der vorhergehenden Ansprüche,
**dadurch gekennzeichnet, dass** die Pollückenstäbe (12) am Blechpaket (6) fixiert sind.

5. Läufer (2) nach Anspruch 4,
**dadurch gekennzeichnet, dass** die Pollückenstäbe (12) Zapfen (22) aufweisen, welche radial nach innen gerichtet sind und in Pollücken zwischen den Polen (14) greifen.

6. Läufer (2) nach einem der vorhergehenden Ansprüche,
**dadurch gekennzeichnet, dass** die Pollückenstäbe (12) mindestens zwei Abschnitte (20) aufweisen, die in Axialrichtung (A) betrachtet zueinander versetzt sind.

7. Läufer (2) nach einem der vorhergehenden Ansprüche,
**dadurch gekennzeichnet, dass** die Pollückenstäbe (12) vollflächig mit der ersten und der zweiten Seite (16a, 16b) der Magnete (10) in Kontakt stehen.

8. Läufer (2) nach einem der Ansprüche 1 bis 6,
**dadurch gekennzeichnet, dass** die Pollückenstäben (12) mehrere quer zur Axialrichtung (A) sich erstreckende Stege (24) aufweisen, über welche sie die Magnete (10) kontaktieren.

9. Läufer (2) nach einem der vorhergehenden Ansprüche,
**dadurch gekennzeichnet, dass** die Magnete (2) als Schalenmagnete ausgebildet sind.

10. Läufer (2) nach einem der vorhergehenden Ansprüche,
**dadurch gekennzeichnet, dass** auf dem Blechpaket (6) unterhalb der Magnete (10) Klebeband (8) aufgebracht ist.

11. Läufer (2) nach einem der vorhergehenden Ansprüche,
**dadurch gekennzeichnet, dass** die Anordnung von Magneten (10) und Pollückenstäben (12) bandagiert ist.

12. Läufer (2) nach einem der vorhergehenden Ansprüche,
**dadurch gekennzeichnet, dass** die Pollückenstäbe (12) mehrere radial nach außen offene Zwischenräume (26) aufweisen.

13. Pollückenstab (12) für einen Läufer (2) nach einem der vorhergehenden Ansprüche.

14. Verfahren zum Herstellen eines Läufers (2) nach einem der Ansprüche 1 bis 12, **dadurch gekennzeichnet, dass**
- das Blechpaket (6) auf die Welle (4) gefügt wird,
- Klebeband (8) zum Vorfixieren der Magnete (10) um den Umfang des Blechpakets (6) aufgebracht wird,
- die Pollückenstäbe (12) und die Magnete (10) angeordnet werden, und
- der Läufer (2) bandagiert wird.
